# EUROPEAN PATENT SPECIFICATION

(11) **EP 4 648 147 B1**
(45) Date of publication and mention of the grant of the patent: **25.02.2026**
(21) Application number: 24175242.7
(22) Date of filing: 10.05.2024
(51) Int. Cl.: H01M 10/04, H01M 10/52, H01M 50/30

(54) **PROCESS UNIT FOR SECONDARY CELL BATTERY MANUFACTURE**
PROZESSEINHEIT ZUR HERSTELLUNG EINER SEKUNDÄRBATTERIE
UNITÉ DE TRAITEMENT POUR LA FABRICATION D'UNE BATTERIE D'ÉLÉMENTS SECONDAIRES

(43) Date of publication of application: 12.11.2025
(73) Proprietor: TM Plaza Co., Ltd., Ulsan 44956 (KR)
(72) Inventor: JUNG, Yonggyu, Nam-gu, Ulsan 44654 (KR)
(74) Representative: Valet Patent Services Limited

(56) References cited:
- CN-A- 111 819 713
- KR-B1- 102 557 176
- KR-B1- 102 557 185

## Description

### [TECHNICAL FIELD]

The present invention relates to a process unit for secondary cell battery manufacture. Specifically, the present invention relates to a process unit that supports and transports a degassing device for removing gases generated in a battery cell of a secondary cell battery.

### [BACKGROUND ART]

Generally, a battery supplies power so that a machine can operate. Recently, portable electronic devices such as laptops and smartphones have become ubiquitous, and electric vehicles have also become commercially available, which has led to a rapid increase in demand for batteries. Since the above batteries have the advantage that they can be recharged and used during discharge, their use has been encouraged. A battery consists of a plurality of battery cells. A battery cell is the most basic unit of a battery, and comprises a battery case, a positive electrode plate, a negative electrode plate, a separator plate, and an electrolyte, which are housed inside the battery case. When manufacturing a battery cell, the battery cell can be activated by connecting the battery cell to a charging facility to charge the battery cell. When charging a battery cell, the ions that were on the negative electrode plate inside the battery cell move to the positive electrode plate via the separator plate, wherein gases are generated inside the battery cell due to activation of the battery cell.

In the manufacture of a conventional battery cell, there was no proper device to remove gases generated in the battery cell, and thus, the following processes were carried out in a state where the battery case was partially swollen, whereby problems frequently occurred, deteriorating the quality of battery cell production, such as deformation of the external shape of the battery case and disconnection between the negative and positive electrode plate and the battery case, and therefore, improvements thereof were urgently required.

In order to solve these problems, Korean Patent No. 10-2607707 earlier filed by the applicant discloses a secondary battery degassing module that can effectively degas the gas inside the pouch in the process of charging the battery cell in the secondary battery pouch. In addition, Korean Patent No. 10-2092269 discloses a battery cell degassing device, but does not disclose a structure for supporting and moving the degassing device. Korean Unexamined Patent Publication No. 10-2013-0044776 further discloses a battery cell degassing device that prevents gas traps inside the battery cell by pressurizing the battery cell from both sides, but does not disclose the support and transport structure of the degassing device.

Therefore, in the degassing and piercing process of pouch cell-type secondary batteries, there is a demand for structural improvements structural improvements in the equipment and modules to improve the operation of the equipment or modules that perform the process and ensure efficiency through space utilization. KR102557176B1 discloses degassing module for secondary battery pouch.

### [DETAILED DESCRIPTION OF THE INVENTION]

### [Technical Problem]

It is an object of the present invention to provide a process unit for secondary cell battery manufacture in which during the manufacturing process of secondary battery cells, the structure of the process unit that performs charging/discharging and degassing processes is designed to be arranged in a vertical direction, which can minimize installation space constraints and ensure process reliability through improved driving operation that differs from existing ones.

### [Technical Solution]

In order to achieve the above objects, according to the present invention, there is provided a process unit for secondary cell battery manufacture, comprising: a mounting plate having a first horizontal rail formed on an upper part; a vertical plate vertically coupled to an upper part of one side of the mounting plate; and a vertical moving guide plate coupled to an inner side of the vertical plate and having a vertical rail formed on a front side, characterized by further comprising: a second horizontal rail formed across the vertical plate at an inside lower part of the vertical plate; a process block connected to the first and second horizontal rails and and having a gas removal unit formed on a front surface to remove gases in a secondary battery cell; a pivot hinge assembly that is located on the upper side of the process block, is connected to the process block, and allows the process block to move forward or backward as it moves upward or downward; and a first drive coupled to the upper part of the pivot hinge assembly.

The pivot hinge assembly may be formed of: a body block; a bracket that is coupled to the body block, and whose upper part is connected to the first power unit; and a chain link that is hinge-coupled to the lower part of the body block.

A rotation shaft protrusion may be formed on the back surface of the process block so as to be hinge-coupled with the chain link, a second rail strap may be formed on the lower part of the process block so as to be connected to the first horizontal rail, and a third rail strap may be formed on the side surface of the process block so as to be connected to the second horizontal rail.

The upper part of one side of the vertical plate may be formed with an entry guide that abuts against a surface of the secondary battery cell in the process of moving the secondary battery cell from the upper part toward the process block, and guides entry to the lower side.

The entry guide may include a slanted moving path that is slanted at a predetermined angle on the upper part, and a vertical moving path that is formed extensively from an end of the slanted moving path and formed long in the vertical direction.

The chain link may be mounted in a slanted shape that is slanted toward the front.

In addition, according to the present invention, there is provided a process unit for secondary cell battery manufacture, comprising: a mounting plate having a first horizontal rail formed on the upper part; a process block connected to the first horizontal rail and having a gas removal unit formed on the front surface to remove gases in the secondary battery cell; a pivot hinge assembly that is located on the upper side of the process block, and allows the process block to move forward or backward as it moves upward or downward; and a first power unit coupled to the upper part of the pivot hinge assembly, wherein the pivot hinge assembly may be formed of: a body block; a bracket that is coupled to the body block, and whose upper part is connected to the first power unit; and a chain link that is first hinge-coupled to the lower part of the body block, and second hinge-coupled to the process block.

The chain link may be mounted in a shape that is slanted toward the front, and may rotate forward by the first hinge coupling due to the downward movement of the body block, thereby horizontally moving the second hinge-coupled process block forward.

The process unit for secondary cell battery manufacture may further comprise a second power unit that is adjacent to the first power unit and is connected to the process block.

### [Advantageous Effects]

The present invention exhibits the effects of minimizing installation space constraints by arranging and designing the structure of the process unit in the vertical direction, and of enabling accurate charging/discharging, degassing, and piercing processes to ensure the process reliability.

The present invention exhibits the effects of efficiently converting vertical movement into horizontal movement by driving the power unit and being able to accurately move the degassing device horizontally.

### [BRIEF DESCRIPTION OF THE DRAWINGS]

FIG. 1 is a perspective view showing a state in which a process unit for secondary cell battery manufacture according to a preferred embodiment of the present invention is applied to a process system;
FIG. 2 is a plan view showing another state in which a process unit for secondary cell battery manufacture according to a preferred embodiment of the present invention is applied to a process system;
FIG. 3 is a perspective view showing the overall appearance of a process unit for secondary cell battery manufacture according to a preferred embodiment of the present invention;
FIG. 4 is an exploded perspective view of a process unit for secondary cell battery manufacture according to a preferred embodiment of the present invention, viewed from the front;
FIG. 5 is the same rear view as FIG. 4;
FIGS. 6A-6B are exemplary diagrams showing the operation state of a process unit for secondary cell battery manufacture according to a preferred embodiment of the present invention, viewed from the front; and
FIGS. 7A-6B are diagrams showing the operation state of a process unit for secondary cell battery manufacture according to a preferred embodiment of the present invention, viewed from the side.

### [DETAILED DESCRIPTION OF THE EMBODIMENTS]

While the present invention may be modified in various ways and take on various alternative forms, specific embodiments thereof are shown in the drawings and described in detail below. However, it should be understood that there is no intent to limit the present invention to the particular forms disclosed, but on the contrary, the present invention covers all modifications, equivalents, and alternatives falling within the scope of the present invention.

The present invention is not limited to the embodiments disclosed below, but may be embodied in various different forms, and only the present embodiment is provided merely to complete the disclosure of the invention and to fully inform those skilled in the art of the scope of the invention.

Hereinafter, the preferred embodiments of the present invention will be described in detail with reference to the accompanying drawings. First, when assigning reference numerals to components in each drawing, it should be noted that the same or corresponding elements will be consistently denoted by the same respective reference numerals and described in detail no more than once regardless of drawing symbols. In addition, in describing the present invention, if it is determined that a specific description of related known configurations or functions may obscure the gist of the present invention, a detailed description thereof will be omitted.

Now, a process unit 100 for secondary cell battery manufacture according to an embodiment of the present invention will be described in detail with reference to the accompanying drawings.

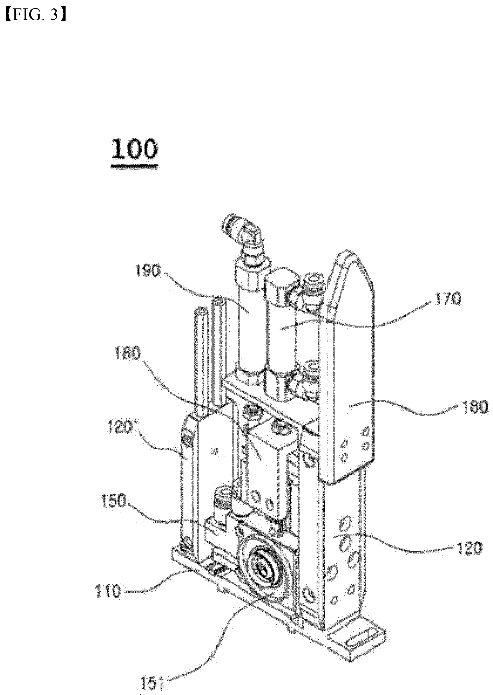

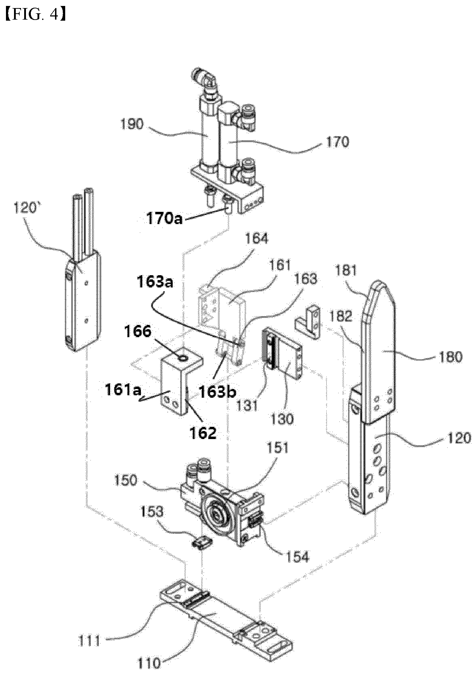

Referring to FIGS. 3, 4 and 5, the process unit 100 for secondary cell battery manufacture according to an embodiment of the present invention largely includes a mounting plate 110, a vertical plate 120, a vertical moving guide plate 130 (FIG. 4), a process block 150, a pivot hinge assembly 160, a first drive 170, and an entry guide 180.

The process unit 100 for secondary cell battery manufacture according to an embodiment of the present invention includes a control unit, a drive unit, a temperature sensor, a heating-related power supply device, and linked drive elements so the operation thereof can be smoothly carried out, wherein the principles of constructing and operating the drive elements correspond to a level of technology that is widely known in the field to which the present invention pertains, and therefore, a detailed description thereof will be omitted.

A process block 150 is located on the mounting plate 110, a vertical plate 120 and an auxiliary vertical plate 120' are located on either side of the process block 150, and a pivot hinge assembly 160 is mounted on the upper part of the process block 150. A first drive 170 and a second drive 190 are installed on the pivot hinge assembly 160. A plate-shaped entry guide 180 is provided, overlapping the upper part of the vertical plate 120 and extending vertically.

The process block 150 includes a gas removal unit 151, wherein the gas removal unit 151 corresponds to a degassing device. When the process block 150 moves forward in FIG. 3 to face or adjoin the pouch of the battery cell, a needle (not shown) of the gas removal unit 151 protrudes, and makes a hole in the pouch, wherein the sucked gas is discharged through a discharge path (not shown). The function of such a gas removal unit is specifically disclosed and known in Korean Patent No. 10-2607707.

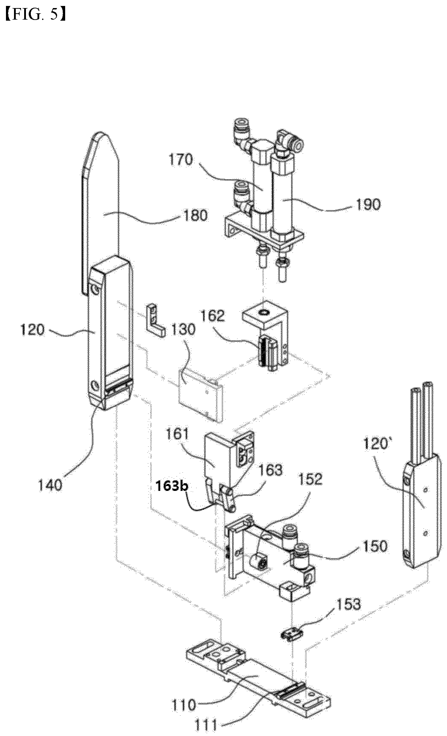

Next, each configuration of the present invention will be described with reference to the exploded perspective views of FIGS. 4 and 5. FIG. 4 is an exploded perspective view of a process unit 100 of FIG. 3, viewed from the front. FIG. 5 is an exploded perspective view of a process unit 100 of FIG. 3, viewed from the rear.

The mounting plate 110 will be described. A process block 150 is mounted at the center of the mounting plate 110. A second rail strap 153 is formed at the lower part of the process block 150. This is coupled to the first horizontal rail 111 formed on the mounting plate 110, and the process block 150 is mounted so as to be slidable along the first horizontal rail 111. A vertical plate 120 is installed on one side of the mounting plate 110 with the process block 150 interposed therebetween, and an auxiliary vertical plate 120' is installed on the other side so as to extend vertically upward. These plates 120 and 120' provide a support structure that are fixed to the mounting plate 110 and support the process block 150 without moving. A third rail strap 154 is formed on the surface of the process block 150 facing the vertical plate 120, and is coupled to the second horizontal rail 140 formed across the vertical plate 120 (FIG. 5). The process block 150 is mounted to be slidable along the second horizontal rail 140, similar to the first horizontal rail 111.

The vertical plate 120 also serves to guide the downward movement of the secondary battery cell 10 entering from above.

The vertical moving guide plate 130 is coupled to the inner side of the vertical plate 120. A vertical rail 131 is formed in a vertical direction on the front surface of the vertical moving guide plate 130. A bracket 161a is located at the front opposite to the vertical moving guide plate 131, and a first rail strap 162 is formed at the rear of the bracket 161a. Since the first rail strap 162 is coupled to the vertical rail 131, the bracket 161a can slidably move in the up-down direction along the vertical rail 131.

A body block 161 is mounted opposite to the bracket 161a. The hole formed on the side surface of the bracket 161a is fastened to the hole formed on the side surface of the body block 161, for example, by means of a bolt (not shown). The lower part extending in a narrow area from the body block 161 is formed with a hole, and the first link 163a of the chain link 163 penetrates through the hole and is connected to the body block 161. The chain link 163 can rotate around the first link 163a as a reference axis. The chain link 163 is mounted to be slanted forward as it moves toward the lower part as shown in the initial state. A second link 163b is mounted on the lower part of the chain link 163. A flap 164 protrudes from the side surface of the body block 161.

The body block 161, the bracket 161a, and the chain link 163 constitute the pivot hinge assembly 160 of the present invention.

The first drive 170 is a cylinder or actuator, and the tip of the drive rod 170a is coupled to the coupling hole 166 formed at the upper part of the bracket 161a. The second drive 190 also consists of a cylinder or an actuator.

An auxiliary vertical plate 120' having a similar shape as the vertical plate 120 may be further formed on the upper part of the other side of the mounting plate 110. The auxiliary vertical plate 120' plays the same role as the vertical plate 120, wherein a cable storage unit (not shown) is formed on the inside and on the upper part to store heating cables and sensor cables for the process block 150.

Referring to FIG. 5, as mentioned above, the second horizontal rail 140 is formed at a position spaced downward from the vertical moving guide plate 130, which serves to guide the forward and backward movement of the process block 150 together with the first horizontal rail 111. The process block 150 can move forward or backward stably and precisely because the lower part and side surfaces thereof are supported and guided by respective horizontal rails.

FIG. 5 clearly shows the connection structure of the process block 150 and the pivot hinge assembly 160. A rotating shaft protrusion 152 is formed on the back surface of the process block 150. The second link 163b of the chain link 163 penetrates through the rotating shaft protrusion 152. Therefore, when the chain link 163 rotates, the process block 150 pushed by the rotating shaft protrusion 152 moves forward or backward. While the chain link 163 rotates the link 163a as a reference axis in one direction or the other direction by the up and down movement of the body block 161, the process block 150 is pushed forward or pulled backward through the link 163b.

The entry guide 180 is configured to be formed long in the vertical direction on the upper part of one side of the vertical plate 120, and includes a slanted moving path 181 that is slanted at a predetermined angle at the upper part, and a vertical moving path 182 that is formed extensively from the end of the slanted path 181 and is formed long in the vertical direction.

The secondary battery cell 10 moves in contact with the slanted moving path 181 and the vertical moving path 182 in the process of moving from the upper part of the process unit 100 for secondary cell battery manufacture to the lower side where the process block 150 is located, and the secondary battery pouch is located at a position corresponding to the front surface of the gas removal unit 151 of the process block 150.

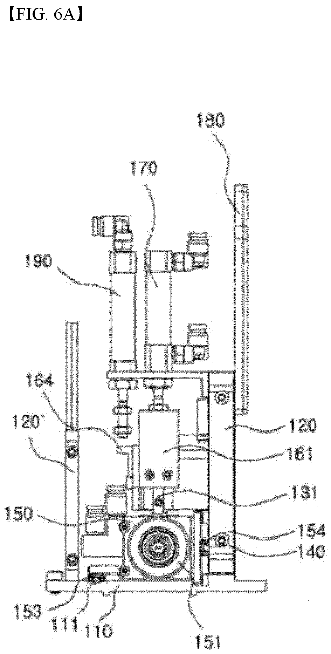

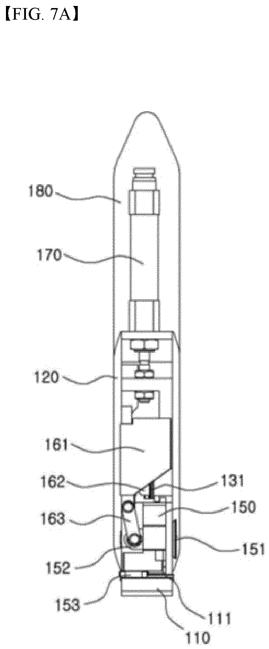

The operation of the process unit 100 for secondary cell battery manufacture of the present invention will be described with reference to FIGS. 6A-6B and 7A-7B.

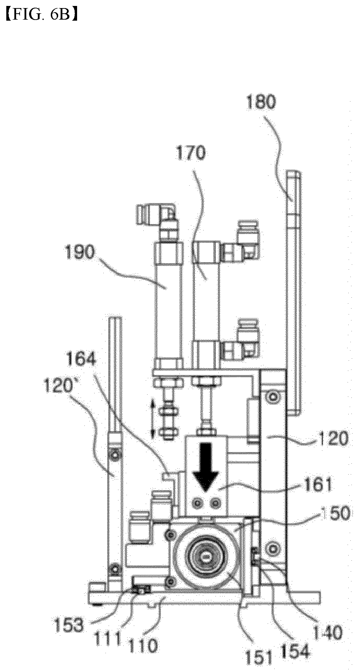

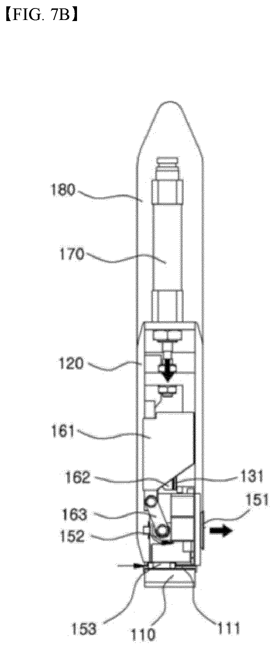

When the first drive 170 is driven and moves vertically downward, the bracket 161a coupled with the drive rod 170a slides downward along the vertical rail 131. The body block 161 coupled with the bracket 161a also moves vertically downward (see FIG. 6B). By the way, the chain link 163 is installed so that it slants forward as it moves downward by default (FIG. 5). Therefore, when the body block 161 moves vertically, it rotates forward on the basis of the first link 163a, and the second link 163b pushes the back surface of the process block 150. The process block 150 moves horizontally forward along the first horizontal rail 111 of the mounting plate 111 and along the second horizontal rail 140 of the vertical plate 120 (see FIG. 7B).

Conversely, when the first drive 170 is driven and moves vertically upward, the body block 161 coupled with the bracket 161a moves vertically upward, the chain link 163 rotates rearward on the basis of the first link 163a, and the second link 163b pulls the back surface of the process block 150. Therefore, the process block 150 moves horizontally backwards along the first horizontal rail 111 of the mounting plate 111 and along the second horizontal rail 140 of the vertical plate 120, and returns to its original position.

The second drive 190 in FIGS. 4 and 5 is connected through a gas discharge hole formed at the upper part of one side of the process block 150 and a hose or pipe (not shown) to discharge the gas sucked by the gas removal unit 151. In this manner, the main components of the process unit 100 are arranged vertically in the present invention, so that space can be utilized efficiently.

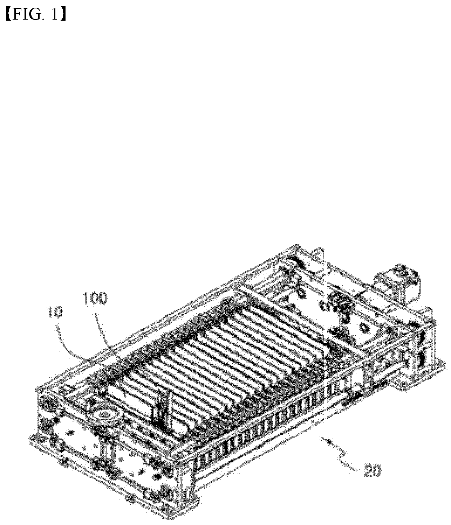

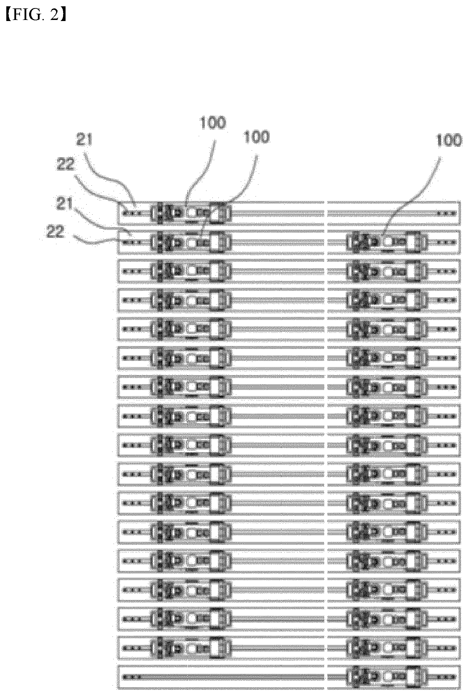

The process unit 100 for secondary cell battery manufacture of the present invention can be mounted as in the secondary battery cell 10 in the process system 20 shown in FIG. 1. Alternatively, as shown in FIG. 2, a pair that moves horizontally along the guide groove 22 can be mounted as a set on each plate 21.

The best embodiments for carrying out the present invention have been disclosed above in the drawings and specification. Specific terms are used herein, however, this is used only for the purpose of explaining the present invention, and is not intended to limit the scope of the present invention stated in the appended claims. Therefore, those skilled in the art will understand that various modifications and other equivalents are possible therefrom. Therefore, the true technical protection scope of the present invention should be determined by the technical idea of the attached claims.

## Claims

1. A process unit (100) for secondary cell battery manufacture, comprising:
a mounting plate (110) having a first horizontal rail (111) formed on an upper part;
a vertical plate (120) vertically coupled to an upper part of one side of the mounting plate (110); and
a vertical moving guide plate (130) coupled to an inner side of the vertical plate (120) and having a vertical rail (131) formed on a front side,
**characterized by** further comprising: a second horizontal rail (140) formed across the vertical plate (120) at an inside lower part of the vertical plate (120);
a process block (150) connected to the first and second horizontal rails (111) and (140) and having a gas removal unit (151) formed on a front surface to remove gases in a secondary battery cell (10);
a pivot hinge assembly (160) that is located on the upper side of the process block (150), is connected to the process block (150), and allows the process block (150) to move forward or backward as it moves upward or downward; and
a first drive (170) coupled to the upper part of the pivot hinge assembly (160).

2. The process unit (100) for secondary cell battery manufacture according to claim (1), wherein the pivot hinge assembly (160) is formed of:
a body block (161);
a bracket (161)a that is coupled to the body block (161), and whose upper part is connected to the first drive (170); and
a chain link (163) that is hinge-coupled to a lower part of the body block (161).

3. The process unit (100) for secondary cell battery manufacture according to claim (2), wherein:
a rotation shaft protrusion (152) is formed on a back surface of the process block (150) so as to be hinge-coupled with the chain link (163),
a second rail strap (153) is formed on the lower part of the process block (150) so as to be connected to the first horizontal rail (111), and
a third rail strap (154) is formed on the side surface of the process block (150) so as to be connected to the second horizontal rail (140).

4. The process unit (100) for secondary cell battery manufacture according to claim (1), wherein:
the upper part of one side of the vertical plate (120) is formed with an entry guide (180) that abuts against a surface of the secondary battery cell (10) in the process of moving the secondary battery cell (10) from the upper part toward the process block (150), and guides entry to the lower side.

5. The process unit (100) for secondary cell battery manufacture according to claim (4), wherein:
the entry guide (180) includes a slanted moving path (181) that is slanted at a predetermined angle on the upper part, and a vertical moving path (182) that is formed extensively from an end of the slanted moving path (181) and formed long in the vertical direction.

6. The process unit (100) for secondary cell battery manufacture according to claim (3), wherein:
the chain link (163) is mounted in a shape that is slanted toward the front.

## Patentansprüche

1. Prozesseinheit (100) zur Herstellung einer Sekundärzellenbatterie, umfassend:
eine Montageplatte (110) mit einer ersten horizontalen Schiene (111), die an einem oberen Teil ausgebildet ist;
eine vertikale Platte (120), die vertikal mit einem oberen Teil einer Seite der Montageplatte (110) gekoppelt ist; und
eine vertikale Bewegungsführungsplatte (130), die mit einer Innenseite der vertikalen Platte (120) gekoppelt ist und eine vertikale Schiene (131) aufweist, die an einer Vorderseite ausgebildet ist,
**dadurch gekennzeichnet, dass** sie ferner umfasst: eine zweite horizontale Schiene (140), die quer über die vertikale Platte (120) an einem inneren unteren Teil der vertikalen Platte (120) ausgebildet ist;
einen Prozessblock (150), der mit der ersten und der zweiten horizontalen Schiene (111) und (140) verbunden ist und eine Gasentfernungseinheit (151) aufweist, die an einer Vorderseite ausgebildet ist, um Gase in einer Sekundärbatteriezelle (10) zu entfernen;
eine Schwenkscharnieranordnung (160), die sich an der Oberseite des Prozessblocks (150) befindet, mit dem Prozessblock (150) verbunden ist und es dem Prozessblock (150) ermöglicht, sich vorwärts oder rückwärts zu bewegen, wenn er sich nach oben oder unten bewegt; und
einen ersten Antrieb (170), der mit dem oberen Teil der Schwenkscharnieranordnung (160) verbunden ist.

2. Prozesseinheit (100) zur Herstellung einer Sekundärzellenbatterie nach Anspruch (1), wobei die Schwenkscharnieranordnung (160) gebildet ist aus:
einem Körperblock (161);
einer Halterung (161), die mit dem Körperblock (161) gekoppelt ist und deren oberer Teil mit dem ersten Antrieb (170) verbunden ist; und
einem Kettenglied (163), das scharnierartig mit einem unteren Teil des Körperblocks (161) gekoppelt ist.

3. Prozesseinheit (100) zur Herstellung einer Sekundärzellenbatterie nach Anspruch (2), wobei:
eine drehbarer Wellenvorsprung (152) an einer Rückseite des Prozessblocks (150) gebildet ist, um mit dem Kettenglied (163) scharnierartig gekoppelt zu sein,
ein zweiter Schienenriemen (153) am unteren Teil des Prozessblocks (150) gebildet ist, um mit der ersten horizontalen Schiene (111) verbunden zu sein, und
ein dritter Schienenriemen (154) ist an der Seitenfläche des Prozessblocks (150) gebildet, um mit der zweiten horizontalen Schiene (140) verbunden zu sein.

4. Prozesseinheit (100) zur Herstellung einer Sekundärzellenbatterie nach Anspruch (1), wobei:
der obere Teil einer Seite der vertikalen Platte (120) mit einer Eingangsführung (180) gebildet ist, die beim Bewegen der Sekundärbatteriezelle (10) vom oberen Teil zum Prozessblock (150) an einer Oberfläche der Sekundärbatteriezelle (10) anliegt und den Eingang zur Unterseite führt.

5. Prozesseinheit (100) zur Herstellung einer Sekundärzellenbatterie nach Anspruch (4), wobei:
die Eingangsführung (180) einen schrägen Bewegungsweg (181), der im oberen Teil in einem vorbestimmten Winkel geneigt ist, und einen vertikalen Bewegungsweg (182) einschließt, der sich weitgehend von einem Ende des schrägen Bewegungswegs (181) aus bildet und in vertikaler Richtung lang gebildet ist.

6. Prozesseinheit (100) zur Herstellung einer Sekundärzellenbatterie nach Anspruch (3), wobei:
das Kettenglied (163) in einer nach vorne geneigten Form montiert ist.

## Revendications

1. Unité de traitement (100) pour la fabrication d'une batterie de cellules secondaires, comprenant :
une plaque de montage (110) présentant un premier rail horizontal (111) formé sur une partie supérieure ;
une plaque verticale (120) couplée verticalement à une partie supérieure d'un côté de la plaque de montage (110) ; et
une plaque de guidage mobile verticale (130) couplée à un côté interne de la plaque verticale (120) et présentant un rail vertical (131) formé sur un côté avant,
**caractérisée en ce qu'**elle comprend en outre : un deuxième rail horizontal (140) formé à travers la plaque verticale (120) au niveau d'une partie inférieure intérieure de la plaque verticale (120) ;
un bloc de traitement (150) relié aux premier et deuxième rails horizontaux (111) et (140) et présentant une unité d'élimination de gaz (151) formée sur une surface avant pour éliminer les gaz dans une cellule de batterie secondaire (10) ;
un ensemble charnière à pivot (160), situé sur le côté supérieur du bloc de traitement (150), est relié au bloc de traitement (150), et permet au bloc de traitement (150) de se déplacer vers l'avant ou vers l'arrière lorsqu'il se déplace vers le haut ou vers le bas ; et
un premier entraînement (170) couplé à la partie supérieure de l'ensemble charnière à pivot (160).

2. Unité de traitement (100) pour la fabrication de batterie de cellules secondaires selon la revendication (1), dans laquelle l'ensemble charnière à pivot (160) est formé de :
un bloc de corps (161) ;
une équerre (161), couplée au bloc de corps (161), et dont la partie supérieure est reliée au premier entraînement (170) ; et
un maillon de chaîne (163), couplé par charnière à une partie inférieure du bloc de corps (161).

3. Unité de traitement (100) pour la fabrication d'une batterie de cellules secondaires selon la revendication (2), dans laquelle :
une extension d'arbre rotatif (152) est formée sur une surface arrière du bloc de traitement (150) de manière à être couplée par charnière au maillon de chaîne (163),
une deuxième sangle de rail (153) est formée sur la partie inférieure du bloc de traitement (150) de manière à être reliée au premier rail horizontal (111), et
une troisième sangle de rail (154) est formée sur la surface latérale du bloc de traitement (150) de manière à être reliée au deuxième rail horizontal (140).

4. Unité de traitement (100) pour la fabrication d'une batterie de cellules secondaires selon la revendication (1), dans laquelle :
la partie supérieure d'un côté de la plaque verticale (120) est formée avec un guide d'entrée (180) qui vient en butée contre une surface de la cellule de batterie secondaire (10) lors du déplacement de la cellule de batterie secondaire (10) de la partie supérieure vers le bloc de traitement (150), et guide l'entrée vers le côté inférieur.

5. Unité de traitement (100) pour la fabrication d'une batterie de cellules secondaires selon la revendication (4), dans laquelle :
le guide d'entrée (180) comporte un trajet de déplacement incliné (181) qui est incliné d'un angle prédéterminé sur la partie supérieure, et un trajet de déplacement vertical (182) qui est formé comme une extension à partir d'une extrémité du trajet de déplacement incliné (181) et formé le long de la direction verticale.

6. Unité de traitement (100) pour la fabrication d'une batterie de cellules secondaires selon la revendication (3), dans laquelle :
le maillon de chaîne (163) est monté dans une forme qui est inclinée vers l'avant.
